Europäisches Patentamt

European Patent Office

Office européen des brevets

(19)

(11) **EP 1 355 176 A1**

(12) ## DEMANDE DE BREVET EUROPEEN

(43) Date de publication:
**22.10.2003 Bulletin 2003/43**

(51) Int Cl.⁷: **G02B 6/16**, G02B 6/34,
G02B 5/20, H04J 14/02

(21) Numéro de dépôt: **03290966.5**

(22) Date de dépôt: **18.04.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **18.04.2002 FR 0204865**

(71) Demandeur: **ALCATEL**
**75008 Paris (FR)**

(72) Inventeurs:
• **Khalfallah, Sabry**
**75005 Paris (FR)**
• **Jacquet, Joel**
**91470 Limours (FR)**

(74) Mandataire: **Fournier, Michel et al**
**Compagnie Financière Alcatel,**
**Intellectual Property Department,**
**5, rue Noel Pons**
**92734 Nanterre Cedex (FR)**

(54) **Filtre optique accordable en longueur d'onde**

(57) Le filtre optique (1) accordable en longueur d'onde, comprend une cavité résonante (4) délimitée par deux éléments réflecteurs opposés (8, 8') non sélectifs en longueur d'onde, et un réflecteur (7) externe à la cavité(4).

Le réflecteur externe (7) présente des pics de transmission pour un nombre entier N de fréquences optiques et la cavité de Fabry-Pérot (4) délimitant une section d'accord de phase (11) est dimensionnées de sorte que la différence entre les fréquences optiques de deux modes résonants quelconques de la cavité (4) ne soit jamais égale à la différence entre les fréquences optiques de deux pics de transmission quelconques du réflecteur externe (7).

Application aux systèmes de télécommunication optiques utilisant le multiplexage en longueur d'onde.

Fig. 2

**Description**

La présente invention se rapporte à un filtre optique accordable en longueur d'onde, de façon rapide et sur une large bande spectrale. L'emploi de tels filtres optiques est particulièrement intéressant dans le domaine des télécommunications optiques qui mettent en oeuvre le multiplexage en longueur d'onde, habituellement appelé "WDM" (acronyme pour l'expression anglo-saxonne "Wavelength Division Multiplexing") ou encore "multiplexage par répartition de fréquences optiques".

Des dispositifs permettant de sélectionner une ou plusieurs fréquences optiques à partir d'un signal WDM d'entrée sont déjà connus. Cependant, aucune des technologies classiques de filtres accordables basées par exemple sur la variation d'une longueur de cavité par déplacement de pièce mécanique ne permet d'obtenir des temps de commutation inférieurs à la milliseconde ou au mieux à la microseconde.

En fait, dans le contexte de la sélection rapide de fréquence pour la commutation de paquets optiques nécessitant des vitesses de commutation se situant dans la gamme des nanosecondes, la seule solution existante actuellement est basée sur les dispositifs sélecteurs de fréquence qui mettent en oeuvre des amplificateurs optiques utilisés en tant que portes optiques ouvertes ou fermées.

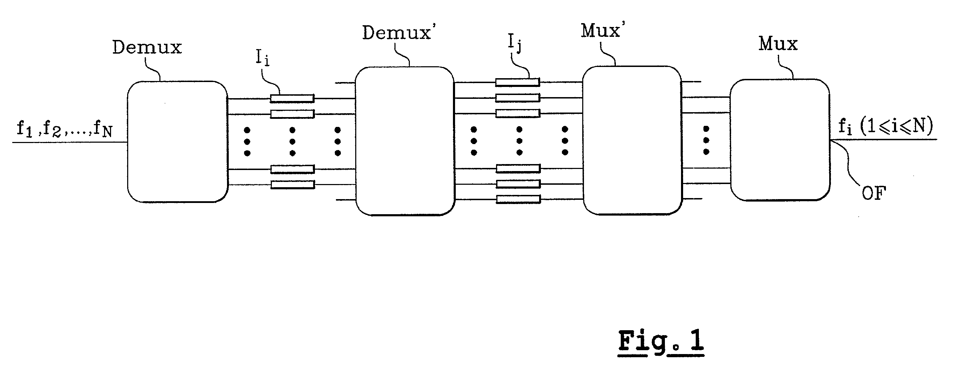

Une architecture particulière d'un tel dispositif sélecteur de fréquence est décrite dans la demande de brevet américain US 2003/0002102, publiée le 2 janvier 2003. Il est notamment décrit dans ce document un dispositif de sélection de canaux d'un multiplex à répartition de fréquences dont un exemple de fonctionnement pour un nombre de canaux égal à N, respectivement $f_1$ à $f_N$, est montré à la figure 1.

Ainsi, le sélecteur de canaux selon D1 comprend un premier démultiplexeur cyclique 1xn Demux pour démultiplexer le multiplex d'entrée en n peignes de fréquences entrelacées constitués chacun de m canaux. Le démultiplexeur utilisé est un démultiplexeur désentrelaceur 1 vers n basé par exemple sur des filtres de type Mach-Zehnder, sur des réseaux gravés ou sur des réseaux à guides d'onde de type AWG (pour « Array Waveguide Grating »). Un deuxième démultiplexeur cyclique mxm Demux' utilisé en tant que routeur et constitué par exemple d'un réseau gravé ou d'un réseau à guides d'onde est prévu pour séparer les canaux des peignes entrelacés. Ce second démultiplexeur cyclique Demux' comprend n ports d'entrée reliés respectivement aux ports de sortie du premier démultiplexeur Demux par l'intermédiaire d'une première barrette composée de n interrupteur optiques Ii, avec i compris entre 1 et n. Chacun des interrupteurs optiques Ii composant la première barrette insérée entre les deux démultiplexeurs Demux et Demux' est avantageusement formé par un amplificateur optique. Le sélecteur de fréquences selon D1 comprend en plus un premier multiplexeur cyclique mxm Mux' utilisé en tant que routeur dont les m ports d'entrée sont reliés respectivement aux m ports de sortie du second démultiplexeur cyclique mxm Demux' par l'intermédiaire d'une seconde barrette composée de m interrupteurs optiques (formés par des amplificateurs optiques) Ij, avec j compris entre 1 et m. Le multiplexeur cyclique mxm Mux' est enfin cascadé avec un second multiplexeur cyclique nx1 Mux de façon à récupérer le ou les canaux sélectionnés sur un port de sortie unique OF du dispositif.

En effet, selon que l'on allume ou éteigne les interrupteurs optiques composant les barrettes d'interrupteurs optiques insérées respectivement entre le multiplexeur 1xn Demux et le démultiplexeur mxm Demux' et entre le démultiplexeur mxm Demux' et le multiplexeur mxm Mux', il est possible de sélectionner et de router la fréquence souhaitée fi (1≤i≤N) du multiplex d'entrée à destination du port de sortie unique OF du dispositif.

Pour obtenir le fonctionnement désiré du dispositif, les nombres n et m doivent être premiers entre eux (et N= nxm, avec n<m) et les composants Demux, Demux', Mux et Mux' doivent être prévus pour fonctionner avec le même espacement spectral entre canaux $\Delta f$.

La configuration du sélecteur de fréquence illustrée à la figure 1 permet donc de mettre en oeuvre la sélection de la fréquence voulue parmi N canaux par l'intermédiaire de l'activation d'un premier amplificateur optique parmi les n composant la première barrette et d'un second amplificateur optique parmi les m composant la seconde barrette.

Ainsi, dans le dispositif sélecteur de fréquence de la figure 1, les valeurs des fréquences traitées sont prédéterminées par les multiplexeurs et démultiplexeurs mis en oeuvre, ce qui assure une stabilité en fréquence, aucun accord ne devant être fait.

De plus, le dispositif de la figure 1 permet d'assurer la sélection rapide de fréquence. En effet, les éléments de commutation utilisés, typiquement des amplificateurs optiques, sont des éléments qui sont intrinsèquement rapides puisque des temps de commutation de l'ordre de la nanoseconde peuvent être atteints par de tels éléments.

Cependant, cette solution présente des inconvénients. En effet, même si l'architecture du sélecteur de fréquence selon la figure 1 permet de s'affranchir de la nécessité de mettre en oeuvre autant d'éléments actifs, en l'occurrence des amplificateurs optiques, qu'il y a de canaux à traiter, elle implique néanmoins de mettre en oeuvre un nombre conséquent d'éléments actifs. Le dispositif de la figure 1 occupe par conséquent une place importante (par exemple une surface de l'ordre de 4,5 X 4,5 mm² pour un sélecteur de fréquence classique à 16 canaux).

Egalement, il est nécessaire de prévoir autant d'éléments électroniques de commande que d'éléments actifs. En effet, l'amplificateur optique activé n'étant pas toujours le même suivant la fréquence que l'on souhaite sélectionner, il faut intégrer au dispositif une puce électronique de commande pour chacun des amplificateurs optiques mis en oeuvre. Ceci implique de prévoir en plus la mise en place de multiples connexions électriques ainsi que des alimentations nécessaires. Ainsi, l'exploitation du composant de la figure 1 va nécessiter une carte électronique complexe et de grande taille.

C'est par conséquent un objet de la présente invention de pallier aux inconvénients susmentionnés en proposant un filtre optique accordable rapidement, c'est-à-dire avec des durées d'accord très courtes, sur une large gamme de fréquences optiques, pour obtenir de façon précise l'une quelconque des fréquences de la grille ITU (International Telecommunication Union) avec un faible espacement entre fréquences consécutives de 50 ou 100 GHz et ce, par action sur une seule grandeur de commande permettant ainsi une électronique de commande simplifiée.

L'invention vise surtout à proposer un filtre optique cumulant les avantages énumérés ci-dessus, tout en étant très compact.

A cet effet, l'invention prévoit de mettre en oeuvre tout d'abord une cavité de Fabry-Pérot, c'est-à-dire une région délimitée par deux éléments réflecteurs opposés non sélectifs en longueur d'onde, et dont les modes résonants sont réglables par un effet électro-optique. Typiquement, un champ électrique est appliqué à une jonction PIN guide d'onde dont l'indice effectif est modifié, en fonction de la valeur du champ électrique, grâce à un effet électro-optique de Franz-Keldish ou à un effet électro-optique de Stark de confinement quantique. La longueur optique de la cavité de Fabry-Pérot peut ainsi être ajustée de façon à pouvoir obtenir les valeurs de fréquence optique correspondant aux modes résonants de la cavité de Fabry-Pérot sur toute la plage de réglage $\Delta f_T$ souhaitée.

La cavité de Fabry-Pérot est optiquement couplée à un réflecteur externe ayant une réflectivité sélective en fréquence. Ce réflecteur est par exemple constitué d'un guide d'onde à réseau de Bragg échantillonné ("SGW" pour "Sampled Grating Waveguide" en anglais). Le guide d'onde à réseau de Bragg échantillonné peut être photo-inscrit dans une fibre ("SFBG" pour "Sampled Fiber Bragg Grating"), mais n'importe quel autre guide d'onde peut être utilisé, en particulier les circuits planaires en silice ou les dispositifs à base de polymères. Le réseau échantillonné est conçu pour avoir N pics de transmission sur toute la plage de réglage mentionnée plus haut.

Un tel dispositif comprend donc une première cavité de Fabry-Pérot à mode de fonctionnement réglable par un effet électro-optique que l'on peut commander, couplée à une seconde cavité externe.

Son principe de fonctionnement est le suivant. La fréquence optique pouvant être transmise par cet ensemble de deux cavités couplées l'une à l'autre est la fréquence du mode résonant de la cavité Fabry-Pérot qui coïncide le mieux avec celle d'un des pics de transmission du réflecteur externe. En changeant les conditions de résonance de la première cavité par action sur une tension de commande déterminant la valeur de champ électrique dans la partie d'accord de phase, un glissement du peigne des modes résonants de la première cavité provoque un changement de coïncidences entre d'une part, les fréquences optiques du peigne de résonance de la cavité et, d'autre part, les fréquences optiques du peigne des pics de transmission. Toute nouvelle coïncidence provoque un saut de mode et une fenêtre de transmission se décale alors à la nouvelle fréquence de résonance qui coïncide avec une autre valeur de fréquence correspondant à un pic de transmission du guide d'onde à réseau de Bragg échantillonné.

Plus précisément, l'invention concerne un filtre optique accordable en longueur d'onde, comprenant une cavité résonante de Fabry-Pérot délimitée par deux éléments réflecteurs opposés non sélectifs en longueur d'onde, et un réflecteur externe à ladite cavité, caractérisé en ce que ledit réflecteur externe présente des pics de transmission pour un nombre entier N de fréquences optiques, en ce que ladite cavité de Fabry-Pérot délimite une section d'accord de phase et est dimensionnée de sorte que la différence entre les fréquences optiques de deux modes résonants quelconques de ladite cavité ne soit jamais égale à la différence entre les fréquences optiques de deux pics de transmission quelconques dudit réflecteur externe.

Ainsi, la cavité résonante étant délimitée par des éléments réflecteurs non sélectifs en longueur d'onde, la cavité est strictement de type "Fabry-Pérot". La différence entre les fréquences de deux modes résonants voisins quelconques est alors pratiquement une constante imposée essentiellement par les compositions et les dimensions des éléments constituant la cavité. Mais, en faisant varier sa longueur optique grâce à la section d'accord de phase, on provoque un glissement du peigne des fréquences de résonance de cette cavité.

Les réflecteurs délimitant la cavité n'étant pas totalement réfléchissant, une onde pourra traverser l'ensemble de la cavité et du réflecteur externe si ce dernier présente un pic de transmission qui coïncide avec l'un des modes résonants de la cavité. Comme la cavité est conçue de sorte que la différence entre les fréquences optiques de deux modes résonants quelconques ne soit jamais égale à la différence entre les fréquences optiques de deux pics de transmission quelconques du réflecteur, un simple ajustement de la section d'accord de phase permet de faire coïncider sélectivement une seule des fréquences correspondant aux pics de transmission avec l'une des fréquences de résonance de la cavité et c'est cette fréquence coïncidente unique qui sera transmise.

Dans le cas particulier important en pratique où la différence entre deux fréquences optiques voisines quelconques de pics de transmission est constante, on prévoira en outre avantageusement que les fréquences optiques des pics de transmission soient entrelacées avec des fréquences optiques consécutives de modes résonants. Cette disposition, toujours obtenue par un dimensionnement approprié de la cavité de Fabry-Pérot, permet des plages de réglage où la valeur de fréquence (ou de longueur d'onde) sélectionnée est une fonction monotone de la tension appliquée. Ceci permet donc de simplifier la commande de la section d'accord de phase.

De préférence dans ce dernier cas, le rapport de la différence entre deux fréquences optiques voisines de deux modes résonants à la différence entre deux fréquences optiques voisines de pics de transmission sera choisi égal à N/ (N-1). Cette disposition assure que le passage d'une valeur de fréquence sélectionnée à la suivante s'effectue par un glissement du peigne des modes résonants selon un pas constant. Il en résulte une sélectivité identique sur toute la gamme de réglage.

Dans un mode préféré de réalisation, le réflecteur extérieur est un guide d'onde comportant au moins un réseau réflecteur de Bragg échantillonné optiquement couplé à la première cavité.

D'autres caractéristiques et avantages de la présente invention apparaîtront plus clairement à la lecture de la description qui suit donnée à titre d'exemple illustratif et non limitatif et faite en référence aux figures annexées dans lesquelles :

- la figure 1 est un schéma illustrant un dispositif sélecteur de fréquence selon l'art antérieur et a déjà été décrite ;
- la figure 2 représente un mode de réalisation général de l'invention ;
- la figure 3 illustre l'imbrication des valeurs de fréquence de résonance de la cavité de Fabry-Pérot et des valeurs de fréquence des pics de transmission du réflecteur externe ;
- la figure 4 comporte les parties A, B et C représentant différents modes de réalisation et de couplage entre le guide d'onde à réseau de Bragg échantillonné (SGW) et la première cavité.

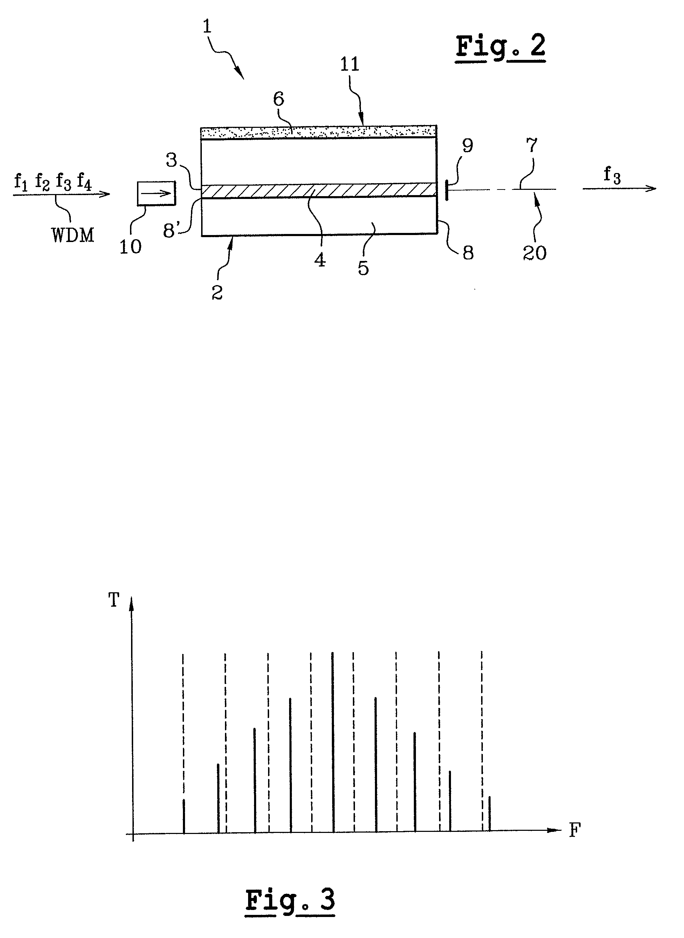

La figure 2 représente donc un mode de réalisation général d'un filtre optique accordable 1 selon l'invention. Un dispositif en semi-conducteur 2 constitue une cavité de Fabry-Pérot 4 et comporte une couche 3 qui forme un coeur de guide d'onde intégré sur un substrat unique 5 en InP et enterré de façon en elle-même connue dans des couches de confinement électrique et optique non référencées sur les figures.

La couche 3 est réalisée en un matériau apte à présenter un effet électro-optique, par exemple de Franz-Keldish ou un effet de Stark de confinement quantique. Une couche métallique de contact 6, par exemple en AuPt est située au-dessus des couches de confinement et constitue une électrode prévue pour recevoir une commande propre sous forme d'une tension appliquée entre celle-ci et une électrode inférieure non représentée.

Ainsi, la cavité de Fabry-Pérot délimite en fait une section d'accord de phase 11 et la longueur optique de la cavité de Fabry-Pérot 4 peut être modifiée par l'application d'une commande de tension sur la couche métallique 6 faisant office d'électrode d'accord de phase. En effet, en fonction de la valeur du champ électrique, l'indice effectif de la section d'accord de phase 11 est modifié, grâce à l'effet électro-optique de Franz-Keldish ou de Stark de confinement quantique, selon la structure et la composition de la couche 3.

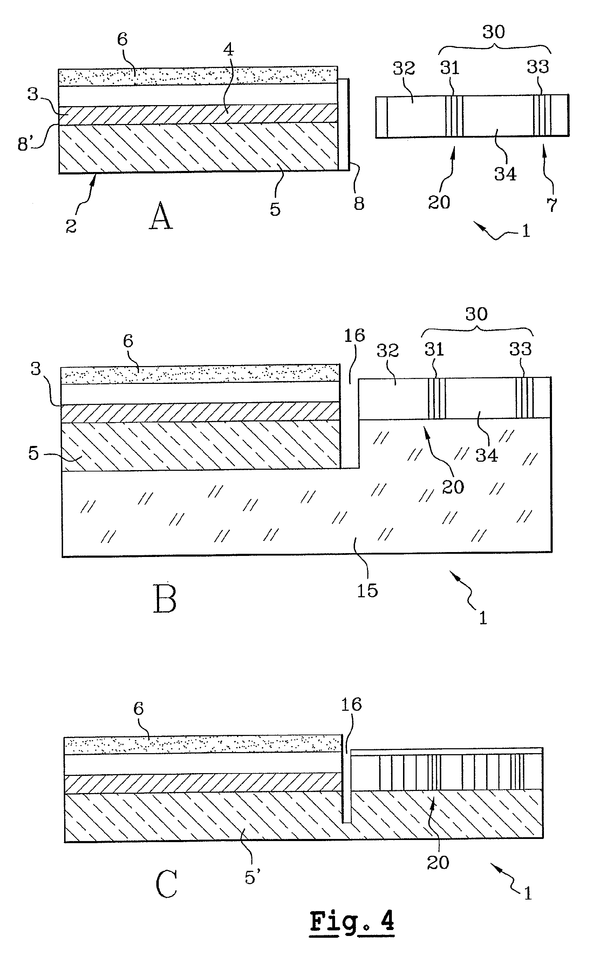

La cavité de Fabry-Pérot 4 est optiquement couplée à un réflecteur 7 formant avec la première cavité 4 une seconde cavité externe. Sur la figure 2, le réflecteur est représenté sous forme générale par un trait d'axe 7. Il sera vu plus loin en référence avec la figure 4 que le réflecteur 7 se présente sous forme d'un guide d'onde 20 comportant au moins un réseau réflecteur de Bragg échantillonné 30 constitué par une alternance d'échantillons de réseaux réflecteurs de Bragg distribués 31, 33... et de sections de Fabry-Pérot 32, 34..., constituées chacune par une partie de guide d'onde uniforme sans réseau de Bragg. Il sera vu plus loin que dans un mode avantageux de réalisation, permettant de réduire la longueur totale de la partie de guide d'onde portant le réseau de Bragg échantillonné, plusieurs réseaux échantillonnés sont imbriqués sur une même portion de guide.

L'ensemble du réseau échantillonné est destiné à produire un peigne de pics de transmission intrinsèquement stable, chaque pic correspondant à une fréquence sur laquelle la cavité de Fabry-Pérot 4 peut être accordée. Il est à noter que les pics de transmission du réflecteur 7 doivent être fins et du même type que les pics de transmission de la cavité de Fabry-Pérot 4.

Selon un mode de réalisation préféré, la première cavité de Fabry-Pérot 4 est formée entre une face arrière 8' semi-réfléchissante de la couche active 3 et la face avant 8 de cette même couche qui porte alors un miroir semi-réfléchissant. Le coefficient de réflexion d'une entrée 9, par exemple une lentille, du réflecteur 7 doit être aussi voisin de 0 que possible de façon à éviter la formation d'une troisième cavité. Quant à la face arrière réfléchissante 8', elle possède de préférence une réflectivité de l'ordre de 50%.

Le filtre accordable 1 est prévu pour recevoir en entrée un signal WDM, composé dans l'exemple de la figure 2 des fréquences $f_1$ à $f_4$. Un isolateur 10 est alors avantageusement disposé en entrée du filtre accordable 1 de façon à empêcher la partie de la lumière réfléchie par la face arrière 8' de repartir dans la fibre d'entrée et de créer ainsi des perturbations incontrôlées.

La figure 3 représente l'espacement et l'imbrication des valeurs des fréquences des modes résonants de la cavité de Fabry-Pérot 4, en traits pointillés, et des valeurs de fréquence correspondant aux différents pics de transmission du réflecteur 7, en traits pleins. Les fréquences sont portées en abscisse, les valeurs relatives du coefficient de transmission des pics sont portées en ordonnée. Le réflecteur 7 présente des pics de transmission pour un nombre entier N de fréquences déterminant N-1 intervalles de fréquence bornés chacun par deux valeurs de fréquence. Les valeurs des fréquences des pics de transmission sont entrelacées avec des valeurs de fréquences correspondant à des modes de résonance de la cavité de Fabry-Pérot 4, de sorte qu'une valeur de fréquence correspondant à un mode résonant de la cavité de Fabry-Pérot 4 est présente sur chaque intervalle entre deux valeurs consécutives de fréquence de pic de transmission du réflecteur 7. La cavité de Fabry-Pérot 4 est donc ici prévue pour présenter au plus N-1 valeurs de fréquence de résonance comprises entre les valeurs extrêmes de fréquence de transmission du réflecteur 7.

Par changement de la valeur de tension appliquée à la section d'accord de phase 11, on change l'indice effectif de la section d'accord de phase et donc sa longueur optique. Le glissement des modes de résonance de la cavité de Fabry-Pérot 4 ainsi obtenu permet qu'une fréquence de résonance de la cavité 4 se situant dans une plage de fréquences comprise dans l'un des N-1 intervalles de fréquence délimités par les pics de transmission du réflecteur 7 se déplace vers l'une des deux valeurs bornant cet intervalle.

En prévoyant que la différence entre les fréquences de deux modes résonants quelconques de ladite cavité ne soit jamais égale à la différence entre les fréquences optiques de deux pics de transmission quelconques du réflecteur 7, les deux peignes sont prévus pour ne permettre qu'une seule superposition d'une fréquence d'un mode résonant avec celle d'un pic de transmission.

On peut ainsi passer d'un premier mode de fonctionnement où le filtre 1 ne laisse passer qu'une fréquence correspondant à un premier pic de transmission du réflecteur 7 à un second mode de fonctionnement où le filtre 1 laisse passer une autre fréquence, et seulement cette fréquence, correspondant à un second pic de transmission du réflecteur 7. Il n'y a donc qu'une unique fréquence susceptible de traverser le filtre 1.

Si en outre le rapport de la différence entre deux fréquences optiques voisines de deux modes résonants à la différence entre deux fréquences optiques voisines de pics de transmission est choisi égal à N/ (N-1), le passage d'une valeur de fréquence sélectionnée à la suivante s'effectue toujours par un glissement du peigne des modes résonants selon un même pas. Ainsi, on obtient une translation régulière monotone des coïncidences entre valeurs de fréquence de modes de résonance de la première cavité et valeurs de fréquence de pics de transmission du réflecteur externe.

Des indications sont données ci-après sur les ordres de grandeur à prendre en considération pour la réalisation de l'invention.

Si L et $n_{eff}$ désignent respectivement la longueur et l'indice effectif de cavité de Fabry-Pérot, l'espacement des modes de résonance de la cavité est donné par la formule

$$\Delta\lambda_{FP} = \lambda^2 / (2.n_{eff}.L)$$

dans laquelle $\Delta\lambda_{FP}$ représente l'espacement entre deux valeurs consécutives de longueur d'onde de résonance de la cavité 4.

Pour une valeur de $n_{eff}$ voisin de 3,2, cela conduit pour 40 canaux avec un espacement de 100 GHz entre canaux consécutifs à une cavité dont la longueur est voisine de 460 $\mu$m. Avec un espacement de 50 GHz, cette longueur serait d'environ 920 $\mu$m.

La variation d'indice à mettre en oeuvre pour couvrir tous les canaux doit correspondre à au moins un espacement entre canaux consécutifs (soit 50 GHz, soit G100 Hz) et est donnée par la formule

$$\Delta n = \lambda/2L$$

Si par exemple, la variation que l'on peut obtenir par un effet Franz-Keldish est de $\Delta n = 5.10^{-3}$, cela conduit à une longueur L pour la cavité de Fabry-Pérot d'au moins 150 $\mu$m pour couvrir tous les canaux.

Le nombre de fréquences de résonance de la cavité de Fabry-Pérot est déterminé par la longueur L de la cavité. La précision sur l'espacement entre canaux consécutifs dépend de la précision au niveau de l'étape de clivage des faces transversales de la cavité qui est en général de 5 $\mu$m en plus ou en moins par rapport à la longueur souhaitée. La variation $d\Delta\lambda$ de l'espacement entre longueurs d'onde consécutives de résonance en fonction de la variation dL de la longueur de la cavité peut s'exprimer par :

$$d\Delta\lambda = 2.dL. \left(\Delta\lambda_{FP}/\lambda\right)^2$$

Ainsi, pour un espacement de 50 GHz entre canaux consécutifs, la précision de l'espacement des fréquences de résonance de la cavité 4 est inférieure à 1 GHz. Un écart aussi petit peut être aisément compensé par action sur la commande en tension appliquée sur la section à d'accord de phase 11.

Des exemples de modes particuliers de réalisation de guides d'onde 20 et de réseaux échantillonnés 30 sont maintenant décrits en référence à la figure 4. Sur cette figure, les éléments déjà décrits en référence à la figure 2 ne seront pas décrits à nouveau. La figure 4 comprend trois parties A, B et C. Sur la partie A, le réseau échantillonné 30 de réseaux réflecteurs 31, 33... de Bragg distribués (SGDBR) est réalisé sur un guide d'onde 20 constitué par une fibre optique. Le coefficient de réflexion R1 de la face clivée 8 de la couche 3 faisant face à la fibre optique 20 doit être adapté pour de faibles pertes de couplage, tandis que le coefficient de réflexion R2 à l'entrée de la fibre doit être nul pour éviter de créer une troisième cavité. La séparation entre la première cavité de Fabry-Pérot 4 et l'entrée de la fibre 20 peut être de l'ordre de plusieurs dizaines de microns. Il convient de tenir compte de cette distance dans le calcul de l'écart de phase de l'onde réfléchie par le réflecteur 7.

Sur la figure 4 partie B, le guide d'onde 20 est un guide d'onde polymère ou silice. Il est possible dans ce cas de monter le dispositif à semi-conducteur 2 où est réalisée la cavité de Fabry-Pérot 4 et le guide 20 sur un substrat commun 15, par exemple en silicium en utilisant une technique d'auto alignement entre les différents composants.

Sur la figure 4, partie C, le guide d'onde 20 est un guide d'onde en InP qui peut être réalisé sur un substrat 5' commun à la cavité de Fabry-Pérot 4 et au guide 20.

La séparation de la cavité 4 et du guide 20 peut être réalisée dans les cas B et C par une gravure 16 formant le miroir de la face 8 située en regard de l'entrée du guide 20.

La façon de fabriquer des réseaux réflecteurs échantillonnés est bien connue dans le domaine des composants optiques pour réaliser des filtres présentant des pics de réflexion étroits selon un gabarit quelconque donné. La mise oeuvre de l'invention qui nécessite de réaliser des filtres présentant des pics de transmission étroits peut également utiliser des réseaux réflecteurs échantillonnés. Pour plus de détails, on peut par exemple se reporter au livre intitulé "Fiber Bragg Gratings", par Raman Kashyap, édité par Academic Press, 1999. Le cas des réseaux présentant des pics de transmission est traité au chapitre 6.1 (voir en particulier la figure 6.9, page 238).

En pratique, pour des facilités de fabrication, il est préférable de réaliser un réseau échantillonné sur une fibre comme représenté figure 4A ou sur un guide d'onde en silice ou en polymère comme figure 4B. en particulier, dans le cas des fibres ou guides en silices, en plus des avantages bien connus de ces guides, faibles pertes, technologies bien maîtrisées, fiabilité, il est à noter que l'indice optique de ces guides peut être ajusté de façon continue par une procédure d'illumination uniforme du guide. Cet ajustement de la valeur de l'indice n permet un réglage fin de l'espacement des fréquences des pics de transmission. Le réseau échantillonné peut aussi être intégré sur un guide d'onde en InP comme représenté figure 4C.

Le filtre accordable selon l'invention réunit donc de nombreux avantages, dont sa compacité. En effet, on a vu en référence à l'art antérieur (figure 1) qu'un sélecteur de fréquence classique occupait une surface de 4,5 x 4,5 mm$^2$, alors que le filtre présenté ici consiste en une cavité de Fabry-Pérot de l'ordre de 200 x 400 μm$^2$ associée à un guide d'onde en silice long de 2 mm ou à une fibre de quelques centimètres. Une plaquette en InP conventionnelle pourrait donc intégrer plus de 200 fois plus de filtres accordables selon la présente invention que de sélecteurs de fréquence classique.

Un autre avantage de l'invention réside dans la simplicité de la commande d'accord et de l'électronique qui lui est associée. Cette simplicité provient du fait que l'accord est obtenu par action sur une seule grandeur de commande, en l'occurrence la tension de commande appliquée à la section à phase accordable.

Enfin, l'accord est réalisé de façon très rapide. La rapidité de réalisation des accords est en effet due à l'effet conjugué de l'emploi d'un effet électro-optique intrinsèquement très rapide et à la simplicité de l'électronique de commande.

## Revendications

1. Filtre optique (1) accordable en longueur d'onde, comprenant une cavité résonante de Fabry-Pérot (4) délimitée par deux éléments réflecteurs opposés (8, 8') non sélectifs en longueur d'onde, et un réflecteur (7) externe à ladite cavité (4), **caractérisé en ce que** ledit réflecteur externe (7) présente des pics de transmission pour un nombre entier N de fréquences optiques, **en ce que** ladite cavité de Fabry-Pérot (4) délimite une section d'accord de phase (11) et est dimensionnées de sorte que la différence entre les fréquences optiques de deux modes résonants quelconques de ladite cavité (4) ne soit jamais égale à la différence entre les fréquences optiques de deux pics de transmission quelconques dudit réflecteur externe (7).

2. Filtre optique (1) accordable selon la revendications 1, **caractérisé en ce que** la différence entre deux fréquences optiques voisines quelconques de pics de transmission étant constante, les fréquences optiques desdits pics de transmission sont entrelacées avec des fréquences optiques consécutives de modes résonants.

3. Filtre optique (1) accordable selon la revendication 2, **caractérisé en ce que** le rapport de la différence entre deux fréquences optiques voisines de deux modes résonants à la différence entre deux fréquences optiques voisines de pics de transmission est égal à N/ (N-1).

4. Filtre optique (1) accordable en fréquence selon l'une des revendications 1 à 3, **caractérisé en ce que** le réflecteur (7) externe est un guide d'onde (20) optiquement couplé à la cavité de Fabry-Pérot (4) et comportant au moins un réseau (30) réflecteur de Bragg échantillonné constitué par une alternance d'échantillons (31, 33) de réseaux réflecteurs de Bragg distribués et de sections de Fabry-Pérot (32,34).

**5.** Filtre optique (1) accordable selon l'une des revendications 1 à 4, **caractérisé en ce que** l'indice effectif de la section d'accord de phase (11) est réglable par effet électro-optique par changement d'une valeur de tension appliquée à ladite section d'accord de phase (11), permettant un glissement des modes de résonance de la cavité de Fabry-Pérot (4).

**6.** Filtre optique (1) accordable selon la revendication 5, **caractérisé en ce que** la variation de l'indice effectif de la section d'accord de phase (11) est obtenue par effet électro-optique de Franz-Keldish.

**7.** Filtre optique (1) accordable selon la revendication 5, **caractérisé en ce que** la variation de l'indice effectif de la section d'accord de phase (11) est obtenue par effet électro-optique de Stark de confinement quantique.

**8.** Filtre optique (1) accordable selon l'une des revendications précédentes, **caractérisé en ce qu'**il comprend en plus un isolateur (10) disposé à son entrée.

EP 1 355 176 A1

$f_1, f_2, \ldots, f_N$

Demux

$I_i$

Demux'

$I_j$

Mux'

Mux

$f_i \ (1 \leqslant i \leqslant N)$

OF

Fig. 1

Fig. 2

Fig. 3

**Fig. 4**

**Office européen des brevets**

**RAPPORT DE RECHERCHE EUROPEENNE**

Numéro de la demande

EP 03 29 0966

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | BEATRIZ ORTEGA: "WDM GRID TUNABLE FILTER BASED ON A SAMPLED FIBRE GRATING AND A FFP" EUROPEAN CONFERENCE ON OPTICAL COMMUNICATION (ECOC '98), 20 - 24 septembre 1998, pages 291-292, XP002225807 MADRID, SPAIN * le document en entier * | 1-8 | G02B6/16 G02B6/34 G02B5/20 H04J14/02 |
| X | ORTEGA B ET AL: "WAVELENGTH DIVISION MULTIPLEXING ALL-FIBER HYBRID DEVICES BASED ON FABRY-PEROT'S AND GRATINGS" JOURNAL OF LIGHTWAVE TECHNOLOGY, IEEE. NEW YORK, US, vol. 17, no. 7, juillet 1999 (1999-07), pages 1241-1247, XP000898387 ISSN: 0733-8724 * le document en entier * | 1-8 | |
| X | CAPMANY J ET AL: "Fibre optic bandpass filter with subpicometre bandwidth using a fibre grating and two fibre Fabry-Perot filters" ELECTRONICS LETTERS, IEE STEVENAGE, GB, vol. 33, no. 23, 6 novembre 1997 (1997-11-06), pages 1970-1972, XP006008153 ISSN: 0013-5194 * le document en entier * -/-- | 1-8 | **DOMAINES TECHNIQUES RECHERCHES (Int.Cl.7)** G02B H04J |

Le présent rapport a été établi pour toutes les revendications

| Lieu de la recherche | Date d'achèvement de la recherche | Examinateur |
|---|---|---|
| LA HAYE | 27 juin 2003 | Ward, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**Office européen**

**des brevets**

**RAPPORT DE RECHERCHE EUROPEENNE**

Numéro de la demande

EP 03 29 0966

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | ORTEGA B ET AL: "Experimental demonstration of an ultraselective and tunable optical bandpass filter using a fibre grating and a Fabry-Perot" ELECTRONICS LETTERS, IEE STEVENAGE, GB, vol. 33, no. 8, 10 avril 1997 (1997-04-10), pages 669-671, XP006007311 ISSN: 0013-5194 * le document en entier * --- | 1-8 | |
| X | LI S ET AL: "FAST ACCURATE WAVELENGTH SWITCHING OF AN ERBIUM-DOPED FIBER LASER WITH A FABRY-PEROT SEMICONDUCTOR FILTER AND FIBER BRAGG GRATINGS" APPLIED PHYSICS LETTERS, AMERICAN INSTITUTE OF PHYSICS. NEW YORK, US, vol. 77, no. 26, 25 décembre 2000 (2000-12-25), pages 4268-4270, XP000994361 ISSN: 0003-6951 * le document en entier * ----- | 1-8 | DOMAINES TECHNIQUES RECHERCHES (Int.Cl.7) |

Le présent rapport a été établi pour toutes les revendications

| Lieu de la recherche | Date d'achèvement de la recherche | Examinateur |
|---|---|---|
| LA HAYE | 27 juin 2003 | Ward, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)